# EUROPÄISCHE PATENTSCHRIFT

(11) **EP 1 109 855 B1**
(45) Veröffentlichungstag und Bekanntmachung des Hinweises auf die Patenterteilung: **18.06.2003**
(21) Anmeldenummer: 99944581.0
(22) Anmeldetag: 01.09.1999
(51) Int. Cl.: C08J 7/04, C09D 4/00

(54) **VERFAHREN ZUR HERSTELLUNG THERMISCH VERFORMTER, MIT EINEM SOL-GEL-LACK BESCHICHTETER SUBSTRATE**
METHOD FOR PRODUCING THERMOSHAPED SUBSTRATES COATED WITH A SOL-GEL LACQUER
PROCEDE DE PRODUCTION DE SUBSTRATS THERMOFORMES, RECOUVERTS D'UNE PEINTURE SOL-GEL

(30) Priorität: 02.09.1998 DE 19840009
(43) Veröffentlichungstag der Anmeldung: 27.06.2001
(73) Patentinhaber: INSTITUT FÜR NEUE MATERIALIEN GEM. GMBH, 66123 Saarbrücken (DE)
(72) Erfinder: KASEMANN, Reiner, D-81737 München (DE); KUNZE, Nora, D-66787 Wadgassen-Schaffhausen (DE); SCHMIDT, Helmut, D-66130 Saarbrücken-Güdingen (DE); SEPEUR, Stefan, D-66787 Wadgassen-Schaffhausen (DE)
(74) Vertreter: Barz, Peter, Dr.
(86) Internationale Anmeldenummer: EP9906438
(87) Internationale Veröffentlichungsnummer: WO00014149

(56) Entgegenhaltungen:
- EP-A- 0 588 508
- WO-A-93/06508
- DE-A- 19 737 328
- US-A- 5 013 788

## Beschreibung

Die Erfindung betrifft ein Verfahren zur Herstellung eines mit einem Sol-Gel-Lack beschichteten Substrats, bei dem das mit dem Sol-Gel-Lack beschichtete Substrat thermisch verformt wird und erst während und/oder nach der thermischen Verformung die vollständige Aushärtung des Sol-Gel-Lacks erfolgt.

Sol-Gel-Werkstoffe bzw. Sol-Gel-Lacke sind dadurch gekennzeichnet, daß sie durch einen Kondensationsschritt in dreidimensional vemetzte Strukturen überführt werden. Da die Kondensationsreaktion spontan abläuft, kann sie zwar z.B. durch Katalysatoren beschleunigt, jedoch nur sehr schwer gestoppt werden. Bei der Vernetzung entstehen in der Regel Gele, die extrem spröde und brüchig sind und eine thermische Verformbarkeit nur oberhalb des Schmelzpunktes ermöglichen. Werden Teile der anorganischen Bindungen durch organische Bindungen ersetzt, dann bleibt die dreidimensionale Vernetzung aufrechterhalten, wird jedoch schwächer. Dies führt in der Regel nicht zu einer thermischen Verformbarkeit, es sei denn, man baut Verbindungen ein, wie z.B. bifunktionelle Silane, die in der Lage sind, lineare Ketten abzubauen und das Netzwerk so weit schwächen, daß der dreidimensionale Charakter kaum mehr auftritt.

So werden in der DE 3011761 Kieselsäure-Heteropolykondensate beschrieben, die thermoverformbares Verhalten aufweisen. Dieses Verhalten ist jedoch im wesentlichen an Phenylsilane geknüpft, da diese nicht nur den Vemetzungsgrad erniedrigen, sondern auch noch das Molekulargewicht entsprechend niedrig halten, um zu einem thermoverformbaren Verhalten zu kommen. Außerhalb der Phenylsilane ist dieses Verhalten praktisch noch nicht beobachtet worden. Die in der DE 3011761 beschriebenen Kieselsäure-Heteropolykondensate werden zum Verbinden von Substraten durch Heißsiegeln verwendet.

In der EP-A-588 508 werden Überzugsmittel beschrieben, die ein multifunktionelles Acrylatmonomer, ein aminofunktionelles Silan, kolloidales Siliciumdioxid und ein Polyalkylenoxid mit endständiger Acrylatgruppe enthalten. Wird dieses Überzugsmittel auf ein Substrat gegeben und vollständig gehärtet, kann das so beschichtete Substrat anschließend geprägt werden, ohne daß der Überzug bricht, d.h. es liegt ein thermoplastischer Werkstoff vor. Dabei wird nur eine mindestens 5% Verstreckung bei Raumtemperatur ermöglicht, eine thermische Verformung wird nicht beschrieben. Die Reißfestigkeit ist aber insbesondere bei thermischer Verformung nicht zufriedenstellend.

US-A-5013788 beschreibt eine spezielle Beschichtungszusammensetzung auf Basis von hydrolysierbaren Silanen, wobei neben 100 Gew.-Teilen eines Alkyltrialkoxysilans, höchstens 20 Gew.-Teile eines epoxyfunktionellen Trialkoxysilans und mindestens 0,5 Gew.-Teile eines fluorierten Säureanhydrids verwendet werden. Nachdem die auf ein Substrat aufgebrachte Beschichtungszusammensetzung teilweise gehärtet worden ist, wird das Substrat durch Biegen geformt. Danach wird die Beschichtung mit einer Alkalilösung behandelt und anschließend weiter gehärtet.

Die Aufgabe der vorliegenden Erfindung bestand nun darin, ein Verfahren zur Herstellung eines mit einem Sol-Gel-Lack beschichteten Substrats bereitzustellen, bei dem man trotz thermischer Verformung des mit dem Sol-Gel-Lack beschichteten Substrats eine rißfreie und harte Beschichtung erhält.

Diese Aufgabe wurde überraschenderweise durch ein Verfahren zur Herstellung eines thermisch verformten mit einem Sol-Gel-Lack beschichteten Substrats gelöst, bei dem der Sol-Gel-Lack ein oder mehrere hydrolysierbare Silane, die gegebenenfalls zu einem Vorkondensat hydrolysiert sind, und gegebenenfalls ein Vernetzungsmittel enthält, wobei wenigstens 25 Mol% der hydrolysierbaren Silane an einem nicht hydrolysierbaren Substituenten eine funktionelle Gruppe aufweisen, über die eine Vernetzung möglich ist, und bei dem
A) der Sol-Gel-Lack auf ein thermisch verformbares Substrat aufgetragen wird,
B) der aufgetragene Sol-Gel-Lack teilweise vorvemetzt und/oder getrocknet wird,
C) anschließend das beschichtete Substrat thermisch verformt wird und
D) während und/oder nach der thermischen Verformung eine vollständige Aushärtung des Sol-Gel-Lacks durch thermische und/oder photochemische Vernetzung durchgeführt wird.

In einer bevorzugten Ausführungsform erfolgt die vollständige Aushärtung des Sol-Gel-Lacks durch thermische und/oder photochemische Vernetzung (Schritt D) nach der thermischen Verformung.

Durch das erfindungsgemäße Verfahren werden überraschenderweise mit Sol-Gel-Lack beschichtete Substrate erhalten, die trotz vorheriger thermischer Verformung ohne Brüche, Risse oder Absplitterungen in der Beschichtung bleiben und dennoch eine harte Oberfläche aufweisen.

Unter einem Sol-Gel-Lack wird ein Lack verstanden, der unter Anwendung des Sol-Gel-Verfahrens hergestellt wird.

Der Sol-Gel-Lack enthält ein oder mehrere hydrolysierbare Silane und gegebenenfalls ein Vemetzungsmittel. In dem erfindungsgemäßen Verfahren werden Sol-Gel-Lacke eingesetzt, in denen wenigstens 25 Mol%, bevorzugt wenigstens 50 Mol%, besonders bevorzugt wenigstens 75 Mol%, ganz besonders bevorzugt 100 Mol% der darin enthaltenen hydrolysierbaren Silane einen oder mehrere nicht hydrolysierbare Substituenten mit einer funktionellen Gruppe aufweisen, über die eine Vernetzung möglich ist.

Bei der Vernetzung handelt es sich um anorganische Vernetzung über Siloxan-Brücken (Sol-Gel-Vernetzung) und/oder eine organische Vernetzung über die funktionellen Gruppen. Die organische Vernetzung kann über Polymerisations-, Polyadditions- oder Polykondensationsreaktionen verlaufen, wobei Polyadditionsreaktionen und Polymerisationsreaktionen bevorzugt sind, da sie im Gegensatz zu Polykondensationsreaktionen zu keinen Abspaltungsprodukten wie Wasser oder Alkoholen führen. Die funktionellen Gruppen werden so ausgewählt, daß über die, gegebenenfalls katalysierten, Polymerisations-, -additions- oder -kondensationsreaktionen eine Vernetzung ausgeführt werden kann.

Es können funktionelle Gruppe gewählt werden, die mit sich selbst die vorstehend genannten Reaktionen ausführen können und dabei die organische Vernetzung bilden.

Beispiele für solche funktionellen Gruppen sind Epoxy-haltige Gruppen und reaktionsfähige Kohlenstoff-Kohlenstoff-Mehrfachbindungen (insbesondere Doppelbindungen). Konkrete und bevorzugte Beispiele für derartige funktionelle Gruppen sind Glycidoxy- und (Meth)acryloxy-Reste.
(insbesondere Chlor und Brom), Alkoxygruppen, Alkylcarbonylgruppen und Acyloxygruppen ausgewählt, wobei Alkoxygruppen, insbesondere C₁₋₄-Alkoxygruppen wie Methoxy und Ethoxy besonders bevorzugt sind. n kann die Werte 1, 2 oder 3, vorzugsweise 1 oder 2 und besonders bevorzugt 1, annehmen.

Die eingesetzten hydrolysierbaren Silane können auch vollständig hydrolysierbare Silane der obigen Formel, in der n gleich 0 ist, umfassen, vorzugsweise in einem Anteil von weniger als 50 Mol-% auf Basis aller eingesetzten monomeren hydrolysierbaren Silane.

Die Gruppe R oder die Gruppen R, die gleich oder verschieden sein können, können Alkyl, Alkenyl, Aryl, Alkylaryl, Arylalkyl oder R'Y sein. Sind alle hydrolysierbaren Silane des Sol-Gel-Lacks Silane von der Formel RₙSiX₄₋ₙ, so weisen wenigstens 25 Mol%, bevorzugt wenigstens 50 Mol%, besonders bevorzugt 75 Mol%, ganz besonders bevorzugt 100 Mol% dieser Silane wenigstens eine Gruppe R'Y auf. R' ist geradkettiges oder verzweigtes Alkylen, das durch Sauerstoff- oder Schwefelatome oder NH-Gruppen unterbrochen sein kann, Phenylen, Alkylphenylen oder Alkylenphenylen. Y ist die funktionelle Gruppe, über die eine Vernetzung möglich ist. Beispiele für Y sind gegebenenfalls substituierte Amino-, Amid-, Alkylcarbonyl, gegebenenfalls substituierte Anilino-, Aldehyd-, Keto-, Carboxyl-, Hydroxyl-, Alkoxy-, Alkoxycarbonyl, Mercapto-, Cyano-, Hydroxyphenyl-, Carbonsäurealkylester-, Sulfonsäure-, Phosphorsäure-, Acryloxy-, Methacryloxy-, Glycidyloxy-, Epoxid-, Allyloder Vinylgruppen. Bevorzugt ist Y eine Acryloxy-, Methacryloxy-, Glycidyloxy-, Epoxid-, Hydroxyl- oder Aminogruppe.

Konkrete und bevorzugte Beispiele für derartige Reste R'Y sind Glycidoxyalkyl- und (Meth)acryloxyalkyl-Reste, wobei der Alkylrest vorzugsweise 1 bis 6 Kohlenstoffatome aufweist, insbesondere Glycidoxypropyl- und (Meth)acryloxy-propylgruppen. Bevorzugte Beispiele für hydrolysierbare Silane, die an einem nicht hydrolysierbaren Substituenten eine funktionelle Gruppe aufweisen, sind Glycidoxyalkyltri(m)ethoxysilan, insbesondere Glycidoxypropyltri(m)ethoxysilan und (Meth)acryloxyalkyltri-(m)ethoxysilan, insbesondere (Meth)acryloxypropyltri(m)ethoxysilan.

Weiterhin kann es sich um funktionelle Gruppe handeln, die mit anderen funktionellen Gruppen, gegebenenfalls katalysierte, Polymerisations-, -additions-oder -kondensationsreaktionen eingehen können (sogenannte korrespondierende funktionelle Gruppen). Es können dann Silane eingesetzt werden, die beide funktionelle Gruppen enthalten oder Mischungen von Silanen, die die jeweiligen korrespondierenden funktionellen Gruppen enthatten. Ist im Sol-Gel-Lack nur eine funktionelle Gruppe enthalten, kann die entsprechende korrespondierende funktionelle Gruppe sich im dann gegebenenfalls einzusetzenden Vernetzungsmittel befinden. Beispielsweise kann eine funktionelle Gruppe mit Kohlenstoff-Kohlenstoff-Mehrfachbindung und eine SH-Gruppe bei erhöhten Temperaturen und gegebenenfalls Katalyse eine Additionsreaktion eingehen. Epoxide können z.B. mit Aminen, alkoholischen Verbindungen wie Phenolen oder deren Abkömmlingen oder Carbonsäuren oder deren Derivaten reagieren. Weitere bevorzugte korrespondierende funktionelle Gruppenpaare sind Methacryloxy/Amin, Allyl/Amin oder Amin/Carbonsäure. Bei Einsatz blockierter Isocyanate können auch Amin/lsocyanat, Isocyanat/Alkohol oder Isocyanat/Phenol als korrespondierende funktionelle Gruppen verwendet werden.

Natürlich kann auch ein Vemetzungsmittel eingesetzt werden, wenn die funktionelle Gruppe des Silans mit sich selbst reagieren könnte oder wenn sich in den Siianen des Sol-Gel-Lacks korrespondierende funktionelle Gruppen befinden. Beispielsweise kann bei Silanen mit Methacryloxygruppen eine Verbindung als Vemetzungsmittel eingesetzt werden, das ebenfalls reaktive Doppelbindungen enthält.

Die funktionelle Gruppe befindet sich an einem nicht hydrolysierbaren Substituenten des Silans. Unter einem nicht hydrolysierbaren Substituenten ist ein hydrolytisch nicht vom Si-Atom abspaltbarer Substituent zu verstehen, der bei der Hydrolyse des Silans mit dem Si-Atom des Silans verknüpft bleibt.

Bei den hydrolysierbaren Silanen handelt es sich bevorzugt um Silane der allgemeinen Formel RₙSiX₄₋ₙ. Bei der oder den Gruppen X, die gleich oder verschieden sein können, und vorzugsweise identisch sind, handelt es sich um hydrolysierbare Reste. Die Reste X werden vorzugsweise aus Halogenatomen In den vorstehenden Formeln können mehrmals vorhandene Reste R, R', X bzw. Y bei einer Verbindung jeweils die gleiche oder unterschiedliche Bedeutung haben. Für die vorstehend genannten Gruppen für die Reste R, R', X und Y können folgende konkreten Beispiele genannt werden:

Die Alkylreste bedeuten z.B. geradkettige, verzweigte oder cyclische Reste mit 1 bis 20, vorzugsweise 1 bis 10 Kohlenstoffatomen und insbesondere niedere Alkylreste mit 1 bis 6, vorzugsweise 1 bis 4 Kohlenstoffatomen. Spezielle Beispiele sind Methyl, Ethyl, n-Propyl, Isopropyl, n-Butyl, sek.-Butyl, tert.-Butyl, Pentyl, n-Hexyl und Cyclohexyl. Die Arylreste enthalten z.B. 6 bis 25, vorzugsweise 6 bis 14 und insbesondere 6 bis 10 Kohlenstoffatome. Spezielle Beispiele sind Phenyl und Naphthyl.

Die Alkenylreste sind z.B. geradkettige, verzweigte oder cyclische Reste mit 2 bis 20, vorzugsweise 2 bis 10 Kohlenstoffatomen und insbesondere niedere Alkenylreste, wie Vinyl und Allyl oder 1-Propenyl.

Die Alkoxy-, Alkylcarbonyl-, Acyloxy-, Alkylamino-, Arylalkyl-, Alkylaryl-, Alkylen-, Alkylphenylen-, Alkylenphenylen-, Keto-, Carbonsäurealkylester-, substituierten Amino- und substituierten Anilinoreste leiten sich z.B. von den vorstehend genannten Alkyl- und Arylresten ab. Spezielle Beispiele sind Methoxy, Ethoxy, n- und i-Propoxy, m-, sek.- und tert.-Butoxy, Acetyloxy, Propionyloxy, Benzyl, Tolyl, Methylen, Ethylen, 1,3-Propylen, Trimethylen und Toluylen.

Die genannten Reste können gegebenenfalls übliche Substituenten tragen, z.B. Halogenatome, niedere Alkylreste, Hydroxyl-, Nitro- und Aminogruppen.

Unter den Halogenen sind Fluor, Chlor und Brom bevorzugt, Fluor ist besonders bevorzugt. Besonders bevorzugt handelt es sich um Silane mit (nicht hydrolysierbaren) fluorhaltigen Resten, insbesondere Kohlenwasserstoffresten. Besonders bevorzugt sind hierbei Silane mit fluorierten Alkylgruppen, z.B. der Formel (ZR')ₙSiX₄₋ₙ, wobei R', X und n wie vorstehend definiert sind, wobei R' bevorzugt Ethylen ist und Z eine perfluorierte Alkylgruppe mit 2 bis 30, vorzugsweise 2 bis 12 und insbesondere 4 bis 8 Kohlenstoffatomen ist. Solche fluorhaltigen Silane sind z.B. in der EP 587 667 beschrieben.

Bei dem erfindungsgemäßen Verfahren werden bevorzugt hydrolysierbare Silane eingesetzt, die eine relativ langsame Kondensationsreaktion eingehen. Dies sind insbesondere Silane mit Substituenten, die die funktionelle Gruppe Y aufweisen, z.B. mit der funktionellen Gruppe Y substituierte Alkylgruppen. Die Silane der allgemeinen Formel RₙSiX₄₋ₙ, bei denen wenigstens eine Gruppe R R'Y ist, erfüllen die Bedingung, eine relativ langsame Kondensationsreaktion einzugehen. Auch Verbindungen der allgemeinen Formel RₙSiX₄₋ₙ, bei denen wenigstens eine Gruppe R Phenyl oder längerkettiges Alkyl ist, können diese Bedingung erfüllen. Bevorzugt wird aber ein Silan eingesetzt, das frei von diesen Gruppen ist.

Eine weitere Möglichkeit der Steuerung der Kondensationsgeschwindigkeit besteht in dem Einsatz von organischen Lösemitteln, die auch zur Einstellung der Viskosität des Sol-Gel-Lacks dienen können. Je nach Art und Menge des eingesetzten Lösemittels ergeben sich Veränderungen in der Kondensationsgeschwindigkeit des Sol-Gel-Lacks. Dabei wird insbesondere durch Einsatz hochsiedender Lösemittel eine langsamere Kondensationsgeschwindigkeit ermöglicht. Der Siedepunkt derartiger hochsiedender Lösemittel liegt vorzugsweise über 150°C.

Beispiele für geeignete Lösemittel sind Alkohole, vorzugsweise niedere aliphatische Alkohole, wie Methanol, Ethanol, 1-Propanol, i-Propanol und 1-Butanol, Ketone, vorzugsweise niedere Dialkylketone wie Aceton und Methylisobutylketon, Ether, vorzugsweise niedere Dialkylether wie Diethylether, Amide wie Dimethylformamid und deren Gemische. Beispiele für hochsiedende Lösemittel sind Triethylenglycol, Diethylenglycoldiethylether und Tetraethylenglycoldimethylether. Diese Lösemittel können allein oder in ihren Mischungen eingesetzt werden.

In Abhängigkeit vom gewünschten zu verformenden Substrat (Material, Dichte, etc.) und dem eingesetzten Sol-Gel-Lack ermöglicht es der Einsatz eines geeigneten Lösemittels, die Kondensationsgeschwindigkeit so an den Prozeß anzupassen (z.B. hinsichtlich der Aufwärmphase), daß vor der thermischen Verformung noch keine vollständige Aushärtung erfolgt. Bevorzugt wird hierbei durch den Einsatz hochsiedender Lösemittel eine verzögerte Reaktionsführung erreicht.

Der Einsatz von besonderen Reaktionsinhibitoren (z.B. Komplexbildnern) ist nicht notwendig. Es können aber Komplexbildner in dem Sol-Gel-Lack enthalten sein. Geeignete Komplexbildner sind beispielsweise Chelat-Bildner wie β-Diketone (z.B. Acetylaceton), β-Ketoester (z.B. Acetylacetat), organische Säuren (z.B. Essigsäure, Propionsäure, Acrylsäure, Methacrylsäure), α-Hydroxycarbonsäuren (z.B. α-Hydroxypropionsäure), aber auch anorganische Komplex-bildende Spezies wie z.B. Fluorid-, Thiocyanat-, Cyanat- und Cyanidionen sowie Ammoniak und quartäre Ammoniumsalze, wie z.B. Tetraalkylammoniumsalze (Chloride, Bromide, Hydroxide, etc.), beispielsweise Tetramethyl- und Tetrahexylammoniumsalze.

Neben den hydrolysierbaren Silanen können erfindungsgemäß auch hydrolysierbare Metallverbindungen eingesetzt werden, vorzugsweise solche, die sich von Metallen der Hauptgruppen Ia, IIa, IIIa und IVa sowie der Nebengruppen IVb, Vb und VIb des Periodensystems ableiten, wobei Verbindungen von Aluminium, Titan und Zirkonium besonders bevorzugt sind. Bei den hydrolysierbaren Verbindungen der letztgenannten Elemente handelt es sich unter Berücksichtigung ihrer bei der Hydrolyse und Kondensation wesentlich höheren Reaktivität als derjenigen der Silicium-Verbindungen vorzugsweise um Komplexverbindungen. Sollen entsprechende aktivere Verbindungen, z.B. die Alkoxide von Al, Ti und/oder Zr, eingesetzt werden, muß durch geeignete Maßnahmen dafür gesorgt werden, daß die hohe Reaktivität dieser Verbindungen nicht zu Problemen bei der Einstellung des gewünschten Kondensationsgrades bzw. der gewünschten Viskosität führt, z.B. durch Arbeiten bei niedriger Temperatur (z.B. 0°C oder darunter) und/oder Einsatz in geringen Mengen und/oder unter starker Verdünnung.

Gegebenenfalls enthält der Sol-Gel-Lack auch ein Vernetzungsmittel. Dies ist insbesondere dann der Fall, wenn im Sol-Gel-Lack nur eine funktionelle Gruppe Y vorhanden ist, die eine korrespondierende funktionelle Gruppe zur Durchführung einer Additions- oder Kondensationsreaktion benötigt. Das Vernetzungsmittel enthält dann mindestens zwei funktionelle Gruppen, die zur funktionellen Gruppe des Silans korrespondieren. Es können aber auch Vernetzungsmittel eingesetzt werden, wenn die funktionelle Gruppe des Silans mit sich selbst reagieren kann. Das Vemetzungsmittel kann dann die gleiche Gruppe oder eine zur funktionellen Gruppe im Silan korrespondierende funktionelle Gruppe tragen. Auch hier enthält das Vernetzungsmittel mindestens zwei funktionelle Gruppen.

Bevorzugte Beispiele für einsetzbare Vemetzungsmittel sind 2,2-Bis(-hydroxyphenyl)-propan (beispielsweise für Silane, die als funktionelle Gruppe Glycidyloxy-, Carboxyl- oder Epoxidgruppen enthalten), Tetraethylenglycoldimethacrylat (beispielsweise wenn das Silan (Meth)acryloxy oder Vinylgruppen enthält). Weitere Beispiele für einsetzbare Vemetzungsmittel sind Bisphenol S, Bisphenol F und Bisphenol-A-dimethacrylat sowie 1,6-Hexandioldimethacrylat, oligomere Methacrylate wie LR 8862, LR 8907 von BASF oder oligomere Urethanacrylate UA 19T von BASF.

Weiter kann der Sol-Gel-Lack gegebenenfalls übliche Additive enthalten, z.B. Füllstoffe, Farbstoffe, Pigmente, Haftvermittler und andere Verarbeitungsmittel.

Es können übliche Füllstoffe enthalten sein. Bevorzugt werden als Füllstoffe nanoskalige anorganische Feststoffteilchen (Nanopartikel) verwendet.

In der vorliegenden Beschreibung und den Ansprüchen werden unter "nanoskaligen anorganischen Feststoffteilchen" solche mit einer mittleren Teilchengröße (einem mittleren Teilchendurchmesser) von nicht mehr als 200 nm, vorzugsweise nicht mehr als 100 nm, und insbesondere nicht mehr als 70 nm verstanden. Ein besonders bevorzugter Teilchengrößenbereich liegt bei 5 bis 50 nm.

Besonders bevorzugt ist der Einbau von nanoskaligen Oxid-, Metall- oder Halbleiterpartikeln, wie sie z. B. in der WO 93/06508 beschrieben sind. Bevorzugte Nanopartikel sind Oxidpulver (Teilchengröße vorzugsweise bis zu 200 nm, insbesondere bis zu 100 nm), wie z.B. Siliciumdioxid, Aluminiumoxid (insbesondere Boehmit) und Zirkoniumoxid. Die Nanopartikel können z. B. in Form von Pulvern oder Solen zugegeben werden. Beispielsweise kann ein Sol-Gel-Lack Nanopartikel in einer Menge von bis zu 60 oder bis zu 70 Gew.-%, bevorzugt in einem Bereich von bis zu 40 oder bis zu 45 Gew.-% enthalten.

Die nanoskaligen anorganischen Feststoffteilchen können aus beliebigen Materialien bestehen, vorzugsweise bestehen sie jedoch aus Metallen und insbesondere aus Metallverbindungen wie beispielsweise (gegebenenfalls hydratisierten) Oxiden wie ZnO, CdO, SiO₂, TiO₂, ZrO₂, CeO₂, SnO₂, Al₂O₃, In₂O₃, La₂O₃, Fe₂O₃, Cu₂O, Ta₂O₅, Nb₂O₅, V₂O₅, MoO₃ oder WO₃; Chalkogeniden wie beispielsweise Sulfiden (z.B. CdS, ZnS, PbS und Ag₂S), Seleniden (z.B. GaSe, CdSe und ZnSe) und Telluriden (z.B. ZnTe oder CdTe), Halogeniden wie AgCl, AgBr, Agl, CuCI, CuBr, Cdl₂ und Pbl₂; Carbiden wie CdC₂ oder SiC; Arseniden wie AlAs, GaAs und GeAs; Antimoniden wie InSb; Nitriden wie BN, AIN, Si₃N₄ und Ti₃N₄; Phosphiden wie GaP, InP, Zn₃P₂ und Cd₃P₂; Phosphaten, Silikaten, Zirkonaten, Aluminaten, Stannaten und den entsprechenden Mischoxiden (z.B. solchen mit Perowskitstruktur wie BaTiO₃ und PbTiO₃).

Es können auch nanoskalige anorganische Feststoff-Teilchen eingesetzt werden, die mit polymerisierbaren und/oder polykondensierbaren organischen Oberflächengruppen versehen sind. Solche polymerisierbaren und/oder polykondensierbaren Nanopartikel und ihre Herstellung sind z.B. in der DE 197 46 885 beschrieben.

Bei den organischen polymerisierbaren und/oder polykondensierbaren Oberflächengruppen handelt es sich um funktionelle Gruppen, die gegebenenfalls katalysierte Polymerisations-, -additions- oder -kondensationsreaktionen eingehen können. Als funktionelle Gruppen kommen die vorstehend für Y genannten Gruppen in Betracht. Zu ihrer Einführung in die Nanopartikel können diese Gruppen z.B. über dieselben hydrolysierbaren Silane, die vorstehend beschrieben wurden, eingeführt werden. Sofern polymerisierbare Nanopartikel eingesetzt werden, die mit hydrolysierbaren Silanen oberflächenmodifiziert sind, werden die dort verwendeten hydrolysierbaren Silane bei der Gesamtmenge der eingesetzten Silane berücksichtigt.

Der Sol-Gel-Vernetzung des Sol-Gel-Lacks wird durch dem Fachmann wohlbekannte Verfahren eingeleitet. Die Ausgangskomponenten des Sol-Gel-Lacks werden im gewünschten Mengenverhältnis unter Feuchtigkeitsausschluß, gegebenenfalls gelöst in einem organischen Lösungsmittel, miteinander vermischt und einer Hydrolyse und Polykondensation unterworfen. Beispiele für geeignete Lösungsmittel wurden vorstehend genannt.

Gleichzeitig oder anschließend wird mindestens die Wassermenge zugegeben, die zur hydrolytischen Spaltung der vorhandenen hydrolysierbaren Gruppen X des Silans stöchiometrisch erforderlich ist.

Die Polykondensation erfolgt gegebenenfalls unter Zusatz eines Katalysators, z.B. einer Protonen oder Hydroxylionen-abspaltenden Verbindung oder eines Amins.

Nach Einleiten der Kondensation des Sol-Gel-Lacks werden die Schritte A) bis D) durchgeführt. Die hierbei verwendeten Parameter, wie Temperatur und Kondensationszeit, richten sich nach den jeweiligen Ausgangskomponenten und deren Mengenanteilen, dem verwendeten Katalysator etc. Prinzipiell kann die Einleitung der Kondensation aber auch nach Schritt A) ausgeführt werden.

Gegebenenfalls werden die Ausgangskomponenten des Sol-Gel-Lacks vor Auftrag auf das thermisch verformbare Substrat durch partielle Hydrolyse in Vorkondensate überführt, die eine geeignete Viskosität haben, um Gieß- und Beschichtungsprozesse durchführen zu können.

Der Sol-Gel-Lack wird in Schritt A) auf ein thermisch verformbares Substrat aufgetragen. Bei dem thermisch verformbaren Substrat kann es sich beispielsweise um Platten oder Folien von thermisch verformbaren Kunststoffen handeln. Beispiele für thermisch verformbare Kunststoffe sind Polyethylen, Polypropylen, Polymethylmethacrylat, Polycarbonat, ABS-Copolymere oder Polyvinylchlorid.

Der Sol-Gel-Lack kann auf jede übliche Weise aufgetragen werden, z.B durch Spritzen, Sprühen, Gießen, Streichen, (Elektro)tauchen oder durch Flutbeschichtung. Der Sol-Gel-Lack kann z. B. in einer Naßschichtdicke im Bereich von 0,5 - 200 µm, bevorzugt 70 - 120 µm, aufgetragen werden.

In Schritt B) wird der aufgetragene Sol-Gel-Lack teilweise vorvernetzt und/oder getrocknet. Dabei wird ein Überzug erhalten, der noch biegebeanspruchbar ist. Unter Trocknung ist hier z.B. ein Abdampfen von gegebenenfalls vorhandenem organischen Lösungsmittel zu verstehen, wobei in dem Sol-Gel-Lack auch anorganische Kondensationsreaktionen erfolgen. Unter teilweiser Vorvernetzung ist eine partielle Vernetzung durch anorganische Sol-Gel-Vernetzung und/oder organische Vernetzung zu verstehen. Eine Sol-Gel-Vernetzung ist eine Kondensationsreaktion, bei der die Silane unter Bildung von Siloxan-Brücken Wasser oder Restalkohole abspalten. Bei der organischen Vernetzung handelt es sich um die Vernetzung über die funktionellen Gruppen.

Wesentlich ist, daß in Schritt B) der Sol-Gel-Lack nicht vollständig vernetzt wird, d.h. der erhaltene Überzug ist (noch) plastisch verformbar und nicht spröde. Die Reaktion kann so geführt werden, daß in Schritt B) sowohl die Sol-Gel-Vernetzung als auch die organische Vernetzung teilweise stattfinden. Es ist aber auch möglich, daß in Schritt B) z.B. die Sol-Gel-Vemetzung teilweise oder vollständig durchgeführt worden ist, während die organische Vernetzung im wesentlichen erst in Schritt D) erfolgt. Dies ist z.B. durch Änderung der Vemetzungsmethode (in Schritt B: thermisch; in Schritt D: photochemisch) möglich. In Verbindung mit einer nachfolgenden photochemischen Härtung besteht die Möglichkeit, die Trocknung und/oder teilweise Vorvernetzung des aufgetragenen Sol-Gel-Lacks bis zur Staubtrockne auszuführen.

Für den anschließenden Schritt C) wird das beschichtete Substrat erwärmt. Die Vorvernetzung gemäß Schritt B) erfolgt bevorzugt während dieser Aufwärmphase. Die mögliche Trocknung erfolgt bevorzugt vor Erwärmung. Damit ist es möglich, eine verbesserte Lagerfähigkeit der beschichteten Substrate vor der thermischen Verformung zu erhalten.

Für die Verformung kann Vakuum, Druck oder Spannung eingesetzt werden. Bevorzugt wird das Tiefzieh-Verfahren, insbesondere unter Vakuum, verwendet.

Während oder nach der thermischen Verformung erfolgt gemäß Schritt D) die vollständige Aushärtung des Sol-Gel-Lacks. Soweit die Sol-Gel-Vernetzung und/oder die organische Vernetzung in den Schritten B) und C) noch nicht vollständig durchgeführt war, wird sie in Schritt D) vervollständigt Der Sol-Gel-Lack, der vor der vollständigen Aushärtung noch verformbar ist, hat nach der vollständigen Aushärtung ein derartiges dreidimensionales Netzwerk gebildet, daß keine thermoplastischen Eigenschaften mehr vorliegen.

Bei der organischen Vernetzung kann es sich je nachdem, welche funktionellen Gruppen vorhanden sind, z.B. um eine thermisch oder photochemisch induzierte Vernetzung handeln. Gegebenenfalls ist in dem Sol-Gel-Lack ein Katalysator/Initiator oder eine entsprechende Vorstufe für diese Vernetzung enthalten. Bei einer bevorzugten Ausführungsform findet in Schritt B) praktisch ausschließlich die Sol-Gel-Vemetzung statt, während die organische Vernetzung hauptsächlich in Schritt D) erfolgt. Dies kann beispielsweise dadurch erreicht werden, daß Schritt D) bei höherer Temperatur als B) durchgeführt wird, wenn die organische Vernetzung im wesentlichen erst bei diesen erhöhten Temperaturen stattfindet. Gleichfalls kann im Sol-Gel-Lack eine Verbindung enthalten sein, die erst bei der erhöhten Temperatur, die in Schritt D) angewandt wird, einen Katalysator für die organische Vernetzung (beispielsweise eine Säure oder eine Base) freisetzt. Beispielsweise kann es sich dabei um einen thermisch aktivierbaren Radikalstarter, wie beispielsweise ein Peroxid oder eine Azo-Verbindung handeln, die erst bei erhöhter Temperatur die thermische Polymerisation z.B. von Methacryloxygruppen initiiert.

Eine andere Möglichkeit besteht darin, daß die organische Vernetzung über die funktionelle Gruppe Y durch aktinische Strahlung, z. B. UV- oder Laser-Licht oder Elektronenstrahlen erfolgt. Beispielsweise erfolgt die Vernetzung von Doppelbindungen in der Regel unter UV-Bestrahlung, wobei entsprechende Katalysatoren/Initiatoren gegebenenfalls hinzugegeben werden müssen.

Als Katalysatoren/Initiatoren kommen alle geläufigen und dem Fachmann bekannten Starter/Startsysteme in Frage, einschließlich radikalischer Photostarter, radikalischer Thermostarter, kationischer Photostarter, kationischer Thermostarter und beliebiger Kombinationen derselben.

Konkrete Beispiele für einsetzbare radikalische Photostarter sind Irgacure® 184 (1-Hydroxycyclohexylphenylketon), Irgacure® 500 (1-Hydroxycyclohexylphenylketon, Benzophenon) und andere von der Firma Ciba-Geigy erhältliche Photoinitiatoren vom Irgacure®-Typ; Darocur® 1173, 1116, 1398, 1174 und 1020 (erhältlich von der Firma Merck); Benzophenon, 2-Chlorthioxanthon, 2-Methylthioxanthon, 2-Isopropylthioxanthon, Benzoin, 4,4'-Dimethoxybenzoin, Benzoinethylether, Benzoinisopropylether, Benzildimethylketal, 1,1,1-Trichloracetophenon, Diethoxyacetophenon und Dibenzosuberon.

Beispiele für radikalische Thermostarter sind u.a. organische Peroxide in Form von Diacylperoxiden, Peroxydicarbonaten, Alkylperestem, Alkylperoxiden, Perketalen, Ketonperoxiden und Alkylhydroperoxiden sowie Azo-Verbindungen. Als konkrete Beispiele wären hier insbesondere Dibenzoyiperoxid, tert-Butylperbenzoat und Azobisisobutyronitril zu nennen.

Ein Beispiel für einen kationischen Photostarter ist Cyracure® UVI-6974, während ein bevorzugter kationischer Thermostarter 1-Methylimidazol ist.

Diese Starter werden in den üblichen, dem Fachmann bekannten Mengen (vorzugsweise 0,01 - 5 Gew.-%, insbesondere 0,1 - 2 Gew.-%, bezogen auf den Gesamt-Feststoffgehalt der Beschichtungszusammensetzung eingesetzt. Selbstverständlich kann unter bestimmten Umständen ganz auf den Starter verzichtet werden, wie z.B. im Fall von Elektronenstrahl- oder Laserhärtung.

Durch das erfindungsgemäße Verfahren sind thermische Verformungen mit einer Verstreckung von über 200% möglich. Trotz dieser erheblichen Verformungen werden Riß- und bruchfreie Beschichtungen erhalten, die überdies eine ausgezeichnete Abriebbeständigkeit und Härte aufweisen.

Die erfindungsgemäßen thermisch verformten Substrate finden Verwendung z. B. als Material für die Verformung und Hinterspritzung von Folien für Displays, als Elektrobauteile (Gehäuse für Telefone, Mobil-Telefone, Radios, Fernseher, etc.), Automobilteile (z.B. Armaturenbrett, Steuerknüppel, Seitenbeschläge, etc.), Spielwaren, Möbelteile, Flugzeugteile, Polymerverscheibungen, Haushaltswaren, Haushaltsgeräte, Sanitäreinrichtungen aus Thermoplasten (z.B. Badewannen oder Waschbecken), flexible Bodenbeläge (z.B. Linoleum oder PVC), CD's, optische Bauteile als Abriebschutz aller Art, beispielsweise für Linsen, Brillengläser, Schutzbrillen, Scheinwerfer, Innen- und Außenspiegel, Folien zur Laminierung von z.B. Glas, Keramik, Metallen, lackierten Oberflächen. Holz, Wänden, Tapeten, Maschinenbauteilen, Bucheinbänden oder Christbaumkugeln. Die erfindungsgemäßen thermisch verformten Substrate finden überall dort Verwendung, wo beschichtete Materialien mit nicht planer Geometrie eingesetzt werden, insbesondere dann, wenn die Beschichtung gehärtet bzw. nachgehärtet werden muß.

### BEISPIELE

### Beispiel 1: GPTES-System (thermische Aushärtung):

0,6 Mol (167,05 g) Glycidyloxypropyltriethoxysilan (GPTES) werden vorgelegt und mit 64,8 g 0,1 n HCI, bezogen auf die hydrolysierbaren Gruppen des eingesetzten GPTES 2 h hydrolysiert.

Danach wird zu diesem Vorhydrolysat 0,24 Mol (54,78 g) 2,2-Bis(-hydroxyphenyl)-propan (BPA) gegeben. Das Molverhältnis von GPTES zu BPA beträgt 1 : 0,4.

Danach erfolgt die Zugabe von 180 g eines Lösemittel-Gemisches von Triethylenglycol und Tetraethylenglycoldimethylether im Verhältnis 1 : 3.

Unmittelbar vor der Verarbeitung werden 0,5 Mol-% (0,240 g) 1-Methylimidazol und 1 Gew.-% (bezogen GPTES) eines Verlaufsmittels (BYK 306) zugegeben und mit dem Lacksystem unter Rühren vermischt (Rührzeit 2 h).

Die Beschichtung wird mittels Flutbeschichtung mit einer Naßfilmdicke von 100 µm auf eine geprimerte PMMA-Platine appliziert und mittels einer Technikumsanlage eine Vakuumverformung durchgerührt. Dabei wird das Schichtsystem ca. 5 min auf der PMMA-Platte bei 175°C mittels IR-Strahler geheizt. Die 4 mm dicke, mit einer Beschichtung versehene PMMA-Platte kann nach ca. 5 min tiefgezogen werden (Verstreckung > 200%), wobei das Schichtsystem während dieses Prozesses noch nicht durchhärtet. Nach dem Tiefziehen erfolgt eine thermische Nachhärtung durch die eingeschalteten IR-Strahler von ca. 5-10 min, währenddessen das System organisch und anorganisch vollständig durchhärtet.

Es wird eine fehlerfreie Beschichtung ohne Risse oder Brüche erhalten.

Zur Charakterisierung der beschichteten Substrate wurde ein Gitterschnitt (GT)-Tape-Test (TT) durchgeführt und zur Abriebbeständigkeit nach Streulichtverlust ein Taber Abraser Test.

### Ergebnis:

GT/TT (1/1) und Taber Abraser (nach 1000 Zyklen; CS 10F, 5,4N) 7,2% Haze.

### Beispiel 2: MPTS-System (UV-Aushärtung):

Zu 49,76 g Böhmit-Sol werden 0,5 Mol (124,4 g) Methacryloxypropyltrimethoxysilan (MPTS) zugesetzt und im Ölbad auf eine Temperatur von 50°C erhitzt.

Zur Hydrolyse werden dem Gemisch 0,75 Mol deionisiertes Wasser zugesetzt. Das System wird auf 100°C erhitzt und 2,5 h unter Rückfluß gekocht.

Nach Abkühlen des Gemisches werden 37,43 g Tetraethylenglycoldimethacrylat und 134,38 g des jeweiligen Lösungsmittels oder Lösungsmittelgemisches hinzugefügt.

Folgende Lösungsmittel wurden dabei erfolgreich eingesetzt
1.) 1-Butanol (thermische Antrocknung möglich)
2.) Diethylenglycoldiethylether
3.) Triethylenglycol/Tetraethylenglycoldimethylether (Verhältnis 1 : 3)
4.) Diethylenglycoldiethylether/Tetraethylenglycoldimethylether (1 : 1)
5.) 1-Butanol/Tetraethylenglycoldimethylether (1 : 1)

Zur radikalischen Vernetzung werden 2 Gew.-% (2,49 g) Benzophenon, bezogen auf MPTS, als Photoinitiator eingesetzt.

Bei dieser Syntheseführung gibt es zwei Möglichkeiten die Verformung durchzuführen:
1. Bei Zusatz von hochsiedenden Lösemitteln erfolgt die Verformung gemäß Beispiel 1, wobei im Unterschied zum thermisch härtenden System die Nachhärtung der Schicht durch eine UV-Bestrahlung erfolgt.
2. Nach Applikation der Schicht auf entsprechende thermoplastische Substrate (Platten oder Folien) wird die Schicht 2 h im Ofen bei 90°C thermisch bis zur Staubtrockene angetrocknet. Diese unter Lichtausschluß lagerfähige beschichtete Substrat kann dann verformt und durch UV-Belichtung nachträglich gehärtet werden, wobei nach der UV-Nachhärtung eine hohe Abriebbeständigkeit der Schichten erreicht wird.

Beschichtungen mit UV-Nachhärtung haben den Vorteil, daß eine Vorbehandlung der thermoplastischen Substrate (PMMA, PC, ABS, etc.) mit Ausnahme von PP und PE nicht notwendig ist, um eine Haftung der Schicht zu erreichen.

Es werden fehlerfrei beschichtete Substrate ohne Risse oder Brüche erhalten.

Zur Charakterisierung der beschichteten Substrate wurde ein Gitterschnitt (GT)-Tape-Test (TT) durchgeführt und zur Abriebbeständigkeit nach Streulichtverlust ein Taber Abraser Test.

### Ergebnis:

GT/TT (0/0): Taber-Abraser (nach 1000 Zyklen CS 10F, 5,4N) 15% Haze.

## Patentansprüche

1. Verfahren zur Herstellung eines thermisch verformten, mit einem Sol-Gel-Lack beschichteten Substrats, bei dem der Sol-Gel-Lack ein oder mehrere hydrolysierbare Silane, die gegebenenfalls zu einem Vorkondensat hydrolysiert sind, und gegebenenfalls ein Vernetzungsmittel enthält, wobei wenigstens 25 Mol% der hydrolysierbaren Silane an einem nicht hydrolysierbaren Substituenten eine funktionelle Gruppe aufweisen, über die eine Vernetzung möglich ist, und bei dem
A) der Sol-Gel-Lack auf ein thermisch verformbares Substrat aufgetragen wird,
B) der aufgetragene Sol-Gel-Lack teilweise vorvemetzt und/oder getrocknet wird,
C) anschließend das mit dem Sol-Gel-Lack beschichtete Substrat thermisch verformt wird und
D) während und/oder nach der thermischen Verformung eine vollständige Aushärtung des Sol-Gel-Lacks durch thermische oder photochemische Vernetzung durchgeführt wird.

2. Verfahren nach Anspruch 1, **dadurch gekennzeichnet, daß** die vollständige Aushärtung des Sol-Gel-Lacks gemäß Schritt D) nach der thermischen Verformung erfolgt.

3. Verfahren nach Anspruch 1 oder 2, **dadurch gekennzeichnet, daß** die in Schritt B) durchgeführte teilweise Vorvemetzung während des Aufwärmens des Substrats zur Vorbereitung von Schritt C) erfolgt.

4. Verfahren nach einem der Ansprüche 1 bis 3, **dadurch gekennzeichnet, daß** der Sol-Gel-Lack nanoskalige anorganische Feststoff-Teilchen enthält.

5. Verfahren nach Anspruch 4, **dadurch gekennzeichnet, daß** die nanoskaligen anorganischen Feststoff-Teilchen nanoskalige Oxidpartikel sind, insbesondere von Siliciumdioxid, Zirkoniumoxid oder Aluminiumoxid, bevorzugt Böhmit.

6. Verfahren nach Anspruch 4 oder 5, **dadurch gekennzeichnet, daß** die nanoskaligen anorganischen Feststoff-Teilchen polymerisierbare und/oder polykondensierbare organische Oberflächengruppen aufweisen.

7. Verfahren nach einem der vorhergehenden Ansprüche, **dadurch gekennzeichnet, daß** wenigstens 75 Mol% der hydrolysierbaren Silane an einem nicht hydrolysierbaren Substituenten eine funktionelle Gruppe aufweisen.

8. Verfahren nach einem der vorhergehenden Ansprüche, **dadurch gekennzeichnet, daß** die funktionelle Gruppe des nicht hydrolysierbaren Silan-Substituenten eine Acryloxy-, Methacryloxy-, Glycidyloxy-, Allyl-, Vinyl-, Carboxyl-, Mercapto-, Epoxid-, Hydroxyl-, Amid- und/oder Aminogruppe ist.

9. Thermisch verformtes, mit einem Sol-Gel-Lack beschichtetes Substrat, erhältlich nach dem Verfahren eines der Ansprüche 1 bis 8.

## Claims

1. Method for producing a thermally shaped substrate coated with a sol-gel coating material, in which the sol-gel coating material comprises one or more hydrolysable silanes, which may have been hydrolysed to form a precondensate, and, if desired, a crosslinking agent, at least 25 mol% of the hydrolysable silanes containing on a non-hydrolysable substituent a functional group by way of which crosslinking is possible, and in which
A) the sol-gel coating material is applied to a thermally shapable substrate,
B) the applied sol-gel coating material is partially precrosslinked and/or dried,
C) the substrate coated with the sol-gel coating material is subsequently shaped thermally, and
D) during and/or after the thermal shaping the sol-gel coating material is cured completely by means of thermal or photochemical crosslinking.

2. Method according to Claim 1, **characterized in that** the complete curing of the sol-gel coating material in accordance with step D) takes place after the thermal shaping.

3. Method according to Claim 1 or 2, **characterized in that** the partial precrosslinking carried out in step B) takes place during the heating of the substrate in preparation for step C).

4. Method according to one of Claims 1 to 3, **characterized in that** the sol-gel coating material comprises nanoscale inorganic particulate solids.

5. Method according to Claim 4, **characterized in that** the nanoscale inorganic particulate solids are nanoscale oxide particles, especially particles of silicon dioxide, zirconium oxide or aluminium oxide, preferably boehmite.

6. Method according to Claim 4 or 5, **characterized in that** the nanoscale inorganic particulate solids possess polymerizable and/or polycondensable organic surface groups.

7. Method according to one of the preceding claims, **characterized in that** at least 75 mol% of the hydrolysable silanes contain a functional group on a non-hydrolysable substituent.

8. Method according to one of the preceding claims, **characterized in that** the functional group of the non-hydrolysable silane substituent is an acryloyloxy, methacryloyloxy, glycidyloxy, allyl, vinyl, carboxyl, mercapto, epoxide, hydroxyl, amide and/or amino group.

9. Thermally shaped substrate coated with a sol-gel coating material, obtainable by the method of one of Claims 1 to 8.

## Revendications

1. Procédé de fabrication d'un substrat thermoformé revêtu d'une couche de vernis sol-gel, dans lequel le vernis sol-gel comprend un ou plusieurs silanes hydrolysables, éventuellement hydrolysés et précondensés, et éventuellement un agent de réticulation, au moins 25 % en moles des silanes hydrolysables comportant, sur un substituant non-hydrolysable, un groupe fonctionnel permettant une réticulation, et dans lequel
(A) le vernis sol-gel est appliqué sur un substrat thermoformable,
(B) le vernis sol-gel appliqué est partiellement pré-réticulé et/ou séché,
(C) le substrat, revêtu de la couche de vernis sol-gel, est ensuite thermoformé, et
(D) le durcissement complet du vernis sol-gel, pendant et/ou après le thermoformage, est obtenu par réticulation thermique ou photochimique.

2. Procédé selon la revendication 1, **caractérisé par le fait que** le durcissement complet du vernis sol-gel de l'étape (D) se fait après l'opération de thermoformage.

3. Procédé selon la revendication 1 ou 2, **caractérisé par le fait que** la pré-réticulation partielle de l'étape (B) se fait pendant le chauffage du substrat le préparant pour l'étape (C).

4. Procédé selon l'une des revendications 1 à 3, **caractérisé par le fait que** le vernis sol-gel contient des nanoparticules solides minérales.

5. Procédé selon la revendication 4, **caractérisé par le fait que** les nanoparticules solides minérales sont des nanoparticules d'oxydes, en particulier de dioxyde de silicium, d'oxyde de zirconium ou d'oxyde d'aluminium, de préférence de boehmite.

6. Procédé selon la revendication 4 ou 5, **caractérisé par le fait que** les nanoparticules solides minérales présentent, à leur surface, des groupes organiques polymérisables et/ou polycondensables.

7. Procédé selon l'une des revendications précédentes, **caractérisé par le fait qu'**au moins 75 % en moles des silanes hydrolysables portent un groupe fonctionnel sur un substituant non-hydrolysable.

8. Procédé selon l'une des revendications précédentes, **caractérisé par le fait que** le groupe fonctionnel du substituant non-hydrolysable, porté par le silane, est un groupe acryloxy, méthacryloxy, glycidyloxy, allyle, vinyle, carboxyle, mercapto, époxy, hydroxyle, amido et/ou amino.

9. Substrat thermoformé revêtu d'une couche de vernis sol-gel, susceptible d'être obtenu par un procédé selon une des revendications 1 à 8.
